**Europäisches Patentamt**

**European Patent Office**

**Office européen des brevets**

(19)

(11) Veröffentlichungsnummer: **0 068 151**
A2

(12) # EUROPÄISCHE PATENTANMELDUNG

(21) Anmeldenummer: 82104624.0

(22) Anmeldetag: 27.05.82

(51) Int. Cl.³: **F 16 F 3/06**, B 61 G 11/06

(30) Priorität: 25.06.81 DE 3124880

(43) Veröffentlichungstag der Anmeldung: 05.01.83
Patentblatt 83/1

(84) Benannte Vertragsstaaten: **AT BE CH DE FR GB IT LI SE**

(71) Anmelder: **Ringfeder G.m.b.H., Duisburger Strasse 145,
D-4150 Krefeld-Uerdingen (DE)**

(72) Erfinder: **Rommerskirchen, Kurt, Garnstrasse 53,
D-4154 Tönisvorst 1 (DE)**
Erfinder: **Friedrichs, Hans, Dipl.-Ing., Akazienweg,
D-4952 Lerbeck (DE)**
Erfinder: **Fabel, Peter, Ing.grad., Havelweg 2,
D-4950 Minden (DE)**

(54) **Reibungsfeder.**

(57) Eine Reibungsfeder weist über jeweils konische Berührungsflächen (3a, 4a, 1e) zusammenwirkende Außen- und Innenringe (3 bzw. 4, 1) auf, wobei mindestens ein Innenring (1) mit einem axialen Schlitz (1b) versehen ist. Um die Schließkraft des geschlitzten Innenringes (1) im Hinblick auf noch bessere betriebliche Eigenschaften der Reibungsfeder zu vergrößern, ist innerhalb dieses Ringes (1) ein ringförmiges, ebenfalls axial geschlitztes Stützelement (2) angeordnet, das über seine äußere Mantelfläche (2a) gegen die innere Umfangsfläche (1a) des geschlitzten Innenringes (1) anliegt.

EP 0 068 151 A2

Ringfeder G.m.b.H.                          M. 1090
4150 Krefeld-Uerdingen


                        Reibungsfeder


Die Erfindung betrifft eine Reibungsfeder, die über jeweils konische Berührungsflächen zusammenwirkende Außen- und Innenringe aufweist, wobei mindestens ein Innenring mit einem axialen Schlitz versehen ist.

Reibungsfedern sind seit langem als Elemente des Maschinenbaues und insbesondere bei Eisenbahnfahrzeugen in Federapparaten und Seitenpuffern verbreitet. Über den axial geschlitzten Innenring, der bis zum Schließen seines Schlitzes als Biegefeder arbeitet, ergibt sich ein im Sinne eines weicheren Anhubes geknicktes Kraft-Weg-Diagramm; nach dem Schließen des Schlitzes verhält sich dieser Innenring annähernd wie die anderen geschlossenen Innenringe der Feder. Eine möglichst hohe Schließkraft des geschlitzten Innenringes ist beispielsweise im Hinblick auf eine zuverlässige Rückführung der Reibungsfeder nach Wegfall einer Stoßkraft in ihre von Längsspiel freie Ausgangslage günstig. Die den bekannten geschlitzten Innenringen eigenen, durch die zulässigen Zug- und Druckspannungen in ihrem dem Schlitz gegenüberliegenden Ringquerschnitt begrenzten Schließkräfte werden als nicht immer ausreichend angesehen.

Der Erfindung liegt die Aufgabe zugrunde, bei einer Reibungsfeder der gattungsgemäßen Art die betrieblichen Eigenschaften durch eine auf möglichst einfache Weise erzielbare Vergrößerung der Schließkraft des geschlitzten Innenringes zu verbessern.

Diese Aufgabe wird erfindungsgemäß dadurch gelöst, daß innerhalb des geschlitzten Innenringes ein ringförmiges, ebenfalls axial geschlitztes Stützelement angeordnet ist, das über seine äußere Mantelfläche gegen die innere Umfangsfläche dieses Innenringes anliegt.

Um das Stützelement im Sinne unbehinderter elastischer Verformungen des geschlitzten Innenringes von Stauchkräften freizuhalten, besteht eine Ausgestaltung gemäß der Erfindung darin, daß die Schlitzbreite des Stützelementes bei unbelasteter Feder zumindest um das Maß der bei Erreichen der Federendkraft vorliegenden maximalen Verformung des geschlitzten Innenringes größer ist als die Schlitzbreite des Innenringes.

Zum Erzielen eines besonders günstigen Biegeverhaltens der Wirkverbindung Innenring - Stützelement und damit auch für eine soweit wie möglich rundere Gestalt des Innenringes nach Schließen seines Schlitzes ist nach einer nächsten Ausführungsform der Erfindung vorgesehen, daß der geschlitzte Innenring und das Stützelement derart zueinander angeordnet sind, daß die jeweiligen Schlitze eine um etwa 180° versetzte Lage aufweisen.

Um den geschlitzten Innenring und das Stützelement in axialer Richtung gegen Verschieben zu sichern, sieht eine weitere Ausgestaltung nach der Erfindung vor, daß das Stützelement im Bereich seiner beiden Stirnflächen mit jeweils einem seine äußere Mantelfläche nach außen überragenden Anschlagbund versehen ist. Durch die Anschlagbunde erhöht sich zudem die Schließkraft des Stützelementes.

Für ein besonders leichtes Zusammenfügen des geschlitzten Innenringes und des mit den Anschlagbunden versehenen Stützelementes liegt es ferner im Wesen der Erfindung, daß mindestens ein Anschlagbund einen in Richtung auf den geschlitzten Innenring ansteigenden Außenkonus aufweist, dessen kleinster Durchmesser geringfügig kleiner ist als der Innendurchmesser des geschlitzten Innenringes.

Die weiter oben genannte Sicherung gegen axiales Verschieben von Innenring und Stützelement zueinander wird nach einem alternativen Merkmal der Erfindung dadurch geschaffen, daß der Innenring an seiner inneren Umfangsfläche eine umlaufende Nut aufweist, deren Breite zumindest der Breite des Stützelementes entspricht.

In ergänzender Weiterbildung der Erfindung ist vorgesehen, daß mindestens einer der beiden an die Nut angrenzenden Abschnitte der inneren Umfangsfläche des Innenringes als in Richtung auf das Stützelement ansteigender Innenkonus ausgebildet ist, dessen größter Durchmesser geringfügig größer ist als der Außendurchmesser des Stützelementes.

In besonders einfacher, herstellungsmäßig und für den Zusammenbau günstiger Weise sind der geschlitzte Innenring und das Stützelement in axialer Richtung gegen Verschieben nach einer anderen Ausgestaltung der Erfindung dadurch zu sichern, daß der geschlitzte Innenring und das Stützelement mit einer in Quermitte angeordneten, aus einem Wulst und einer Bettung gebildeten Halterung versehen sind.

Im Hinblick auf eine möglichst wirtschaftliche Gestaltung einer Reibungsfeder, die mindestens zwei geschlitzte Innenringe aufweist, sieht eine nächste Ausführungsform der Erfindung vor, daß das Stützelement in seiner Breite entsprechend der jeweiligen Breite der geschlitzten Innenringe und deren Längsabstand zueinander ausgebildet ist.

0068151
M. 1090

Bei dieser Ausführungsform ergibt sich über das einzige Stützelement außerdem günstig eine gegenüber einer Einzelanordnung von mehreren Stützelementen höhere Schließkraft für die Innenringe, da der den Längsabstand zwischen den Innenringen überbrückende Abschnitt dieses Stützelementes an der Verformung teilnimmt.

Um beim Arbeiten der Reibungsfeder Verschleiß an der inneren Umfangsfläche des geschlitzten Innenringes zu vermeiden, ist es nach einer erfindungsgemäßen Weiterbildung gegeben, daß das Stützelement im jeweiligen Bereich des Überganges der äußeren Mantelfläche in die den Schlitz begrenzende Seitenfläche eine Abrundung aufweist.

Falls eine besondere hohe Schließkraft für den oder die geschlitzten Innenringe gewünscht wird, besteht eine weitere Ausgestaltung der Erfindung darin, daß das Stützelement über seine innere Mantelfläche mit der äußeren Mantelfläche eines zusätzlichen Stützelementes zusammenwirkt.

Die mit dem Gegenstand nach der Erfindung erzielbaren Vorteile bestehen insbesondere in folgendem:

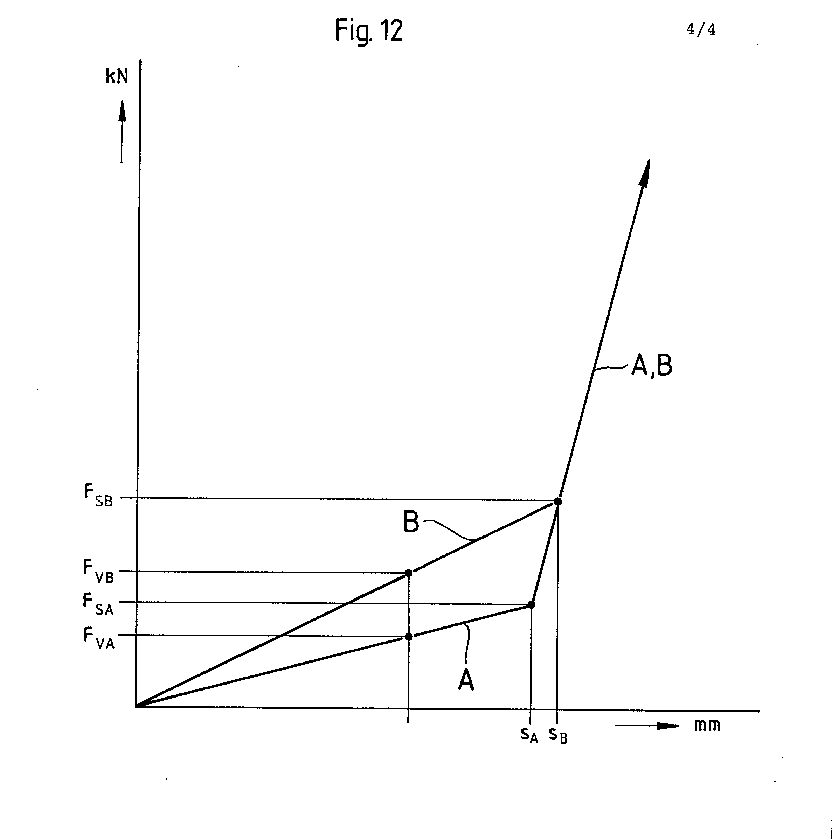

Durch das Stützelement wird auf einfache Weise die Schließkraft des Innenringes um denjenigen Betrag vergrößert, der sich aus dem Biegequerschnitt des Stützelementes und aus der Reibung zwischen Innenring und Stützelement ergibt. Die größere Schließkraft führt mit Blick auf das Kraft-Weg-Diagramm der Reibungsfeder (s. Fig. 12) zu einer Federkennlinie, die bei unveränderter Endkraft einen längeren Weg für den weichen Anhub aufweist. Daraus resultiert bei Einsatz der Reibungsfeder als Pufferfeder eine höhere Entgleisungssicherheit der Schienenfahrzeuge, vor allem im Rangierbetrieb. Durch das Stützelement wird außerdem eine längere wartungsfreie Standzeit der Reibungsfeder selbst erreicht; darüber hinaus haben mit solchen Reibungsfedern ausgerüstete Puffer einen geringeren Verschleiß an den Puffertellern.

Ausführungsbeispiele der Erfindung sind in der Zeichnung dargestellt und werden im folgenden näher beschrieben. Es zeigen

Fig. 1   den Schnitt I - I aus Fig. 2,

Fig. 2   eine Reibungsfeder in Ansicht,

Fig. 3   jeweils unterschiedliche Ausbildungen einer
bis 10  Reibungsfeder, darstellungsmäßig entsprechend
         Fig. 1,

Fig. 11  eine als Pufferfeder für Schienenfahrzeuge
         vorgesehene Reibungsfeder, im Längsschnitt,
         wobei die obere und die untere Bildhälfte
         zueinander unterschiedliche Ausführungsmöglichkeiten enthalten,

Fig. 12  ein lediglich als qualitativ anzusehendes
         statisches Kraft-Weg-Diagramm beispielsweise der Reibungsfeder nach Fig. 11.

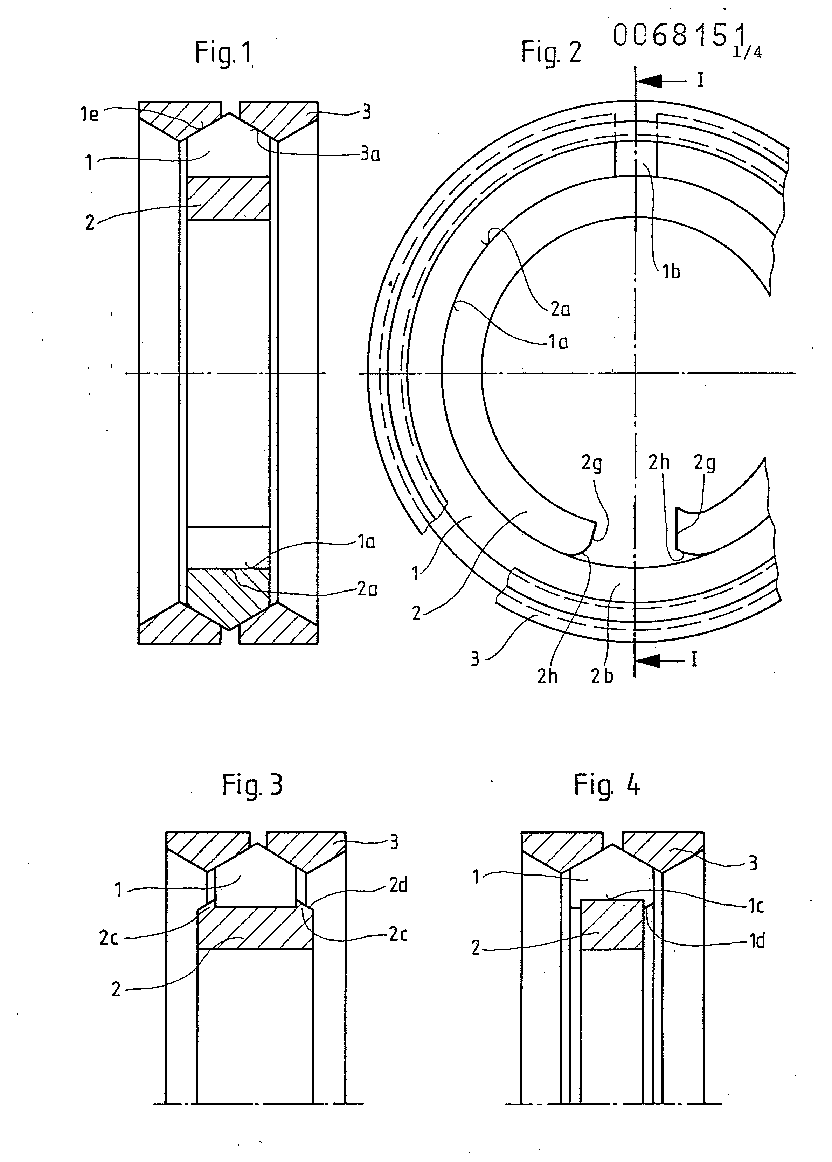

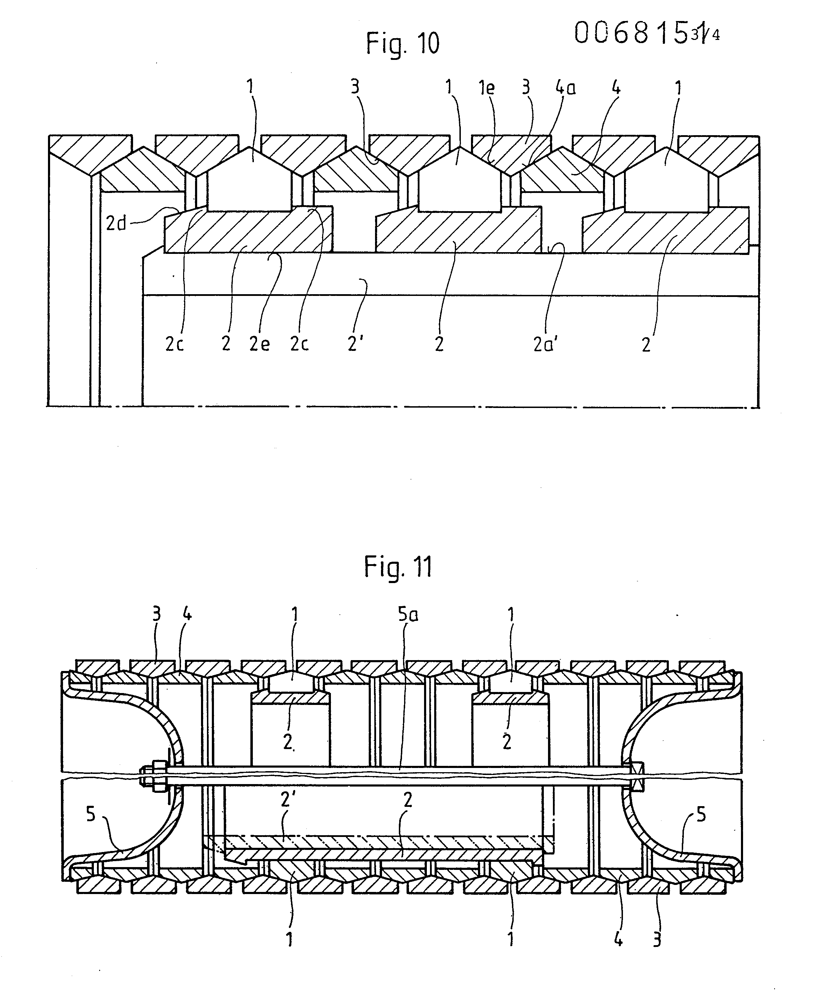

Hinsichtlich des grundsätzlichen Aufbaues aller hier dargestellten Reibungsfedern wird anhand der Fig. 10 oder
Fig. 11 bemerkt, daß diese Federn geschlossene Außenringe
3, geschlossene Innenringe 4 (in den Fig. 1 bis 9 weggelassen) und mindestens einen mit einem axialen Schlitz 1b
versehenen Innenring 1 aufweisen. Die vorgenannten Ringe
3, 4 und 1 wirken jeweils über konische Berührungsflächen
3a und 4a bzw. 3a und 1e unter Verwendung eines geeigneten Schmierfettes zusammen. Gemäß den Fig. 1 bis 11
- siehe insbesondere Fig. 1 und 2 - ist innerhalb des
geschlitzten Innenringes 1 ein ringförmiges, ebenfalls
axial geschlitztes Stützelement 2 angeordnet. Dieses
Stützelement 2 liegt über seine äußere Mantelfläche 2a
gegen die innere Umfangsfläche 1a des geschlitzten Innenringes 1 an. Wie aus Fig. 2 ersichtlich, hat das Stützelement 2 bei unbelasteter Feder eine Schlitzbreite, die zumindest um das Maß der bei Erreichen der Federendkraft vorliegenden maximalen Verformung des geschlitzten Innenringes 1 größer ist als die Schlitzbreite dieses Ringes 1. Weiter nach Fig. 2 sind der geschlitzte Innenring 1 und das Stützelement 2 derart zueinander angeordnet, daß die jeweiligen Schlitze 1b bzw. 2b eine um etwa 180° versetzte Lage aufweisen. Aus Fig. 2 sind außerdem Abrundungen 2h am Stützelement 2 ersichtlich, die im Übergangsbereich der äußeren Mantelfläche 2a in die den Schlitz 2b begrenzenden Seitenflächen 2g angeordnet sind, und zwar in Fig. 2 links als angearbeiteter Radius, rechts als gebogener Abschnitt.

Beispielsweise nach Fig. 3 ist das Stützelement 2 im Bereich seiner Längsenden mit jeweils einem Anschlagbund 2c versehen, der die äußere Mantelfläche 2a nach außen überragt. Mindestens einer dieser Anschlagbunde 2c weist einen in Richtung auf den geschlitzten Innenring 1 ansteigenden Außenkonus 2d auf, dessen kleinster Durchmesser geringfügig kleiner ist als der Innendurchmesser des geschlitzten Innenringes 1.

Als Alternative zu der Gestaltung nach Fig. 3 ist in Fig. 4 die Möglichkeit dargestellt, den geschlitzten Innenring 1 an seiner inneren Umfangsfläche 1a mit einer umlaufenden Nut 1c auszubilden, deren Breite zumindest der Breite des Stützelementes 2 entspricht. Ein neben der Nut 1c befindlicher Innenkonus 1d, dessen größter Durchmesser geringfügig größer ist als der Außendurchmesser des Stützelementes 2, vereinfacht das Zusammenfügen von Innenring 1 und Stützelement 2.

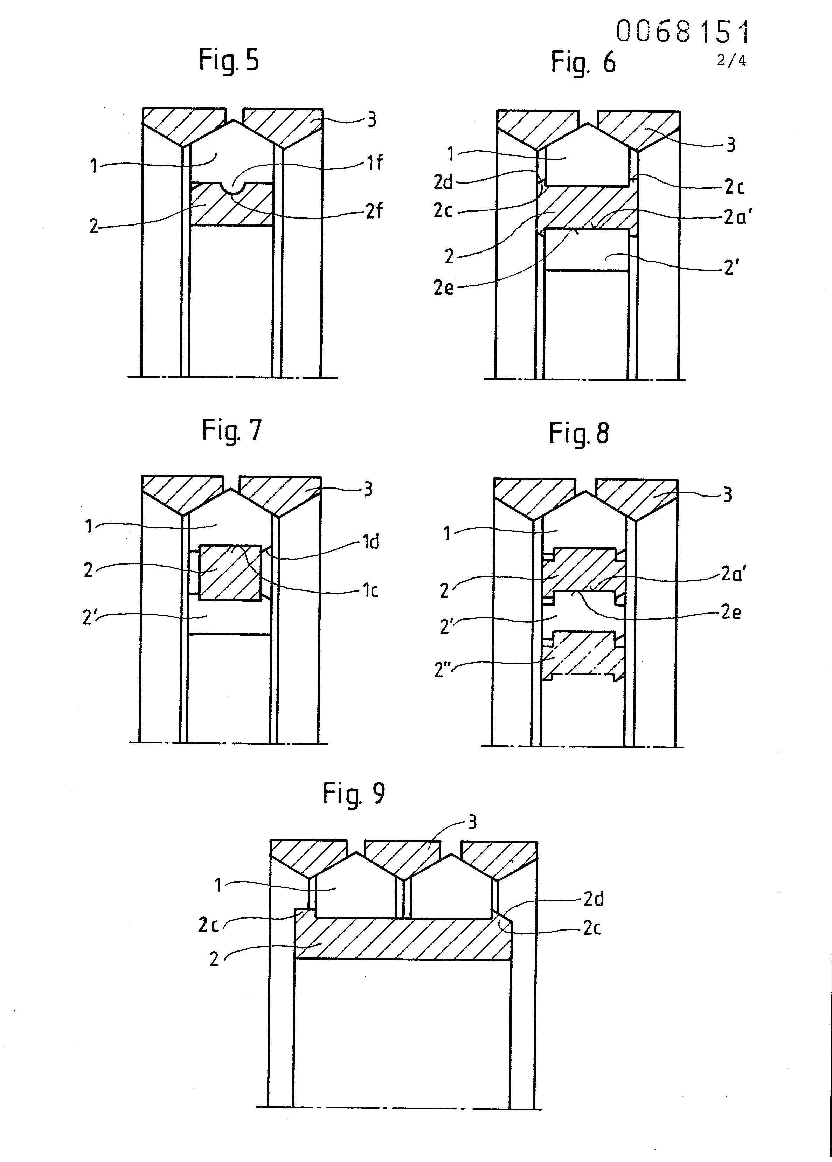

Eine weitere Wahlmöglichkeit zu den Gestaltungen nach Fig. 3 und 4 besteht gemäß Fig. 5 darin, daß der geschlitzte Innenring 1 in Quermitte mit einem Wulst 1f versehen ist, der in eine Bettung 2f des Stützelementes 2 eingreift. Die so gebildete Halterung kann auch in umgekehrter Anordnung erfolgen.

Falls die Schließkraft des geschlitzten Innenringes 1 über die durch das Stützelement 2 erzielte Vergrößerung hinaus erhöht werden soll, kann gemäß den Fig. 6 bis 8 das Stützelement 2 über seine innere Mantelfläche 2e mit der äußeren Mantelfläche 2a' eines zusätzlichen Stützelementes 2' zusammenwirken und dieses - siehe Fig. 8 - ein weiteres Stützelement 2" aufnehmen.

In den Fig. 9, 10 und 11 wird von einer Reibungsfeder mit mehr als einem geschlitzten Innenring 1 ausgegangen. Hierbei empfiehlt es sich - in Weiterentwicklung einer in Fig. 10 und Fig. 11 obere Bildhälfte dargestellte Einzelanordnung von Stützelementen 2 -, sämtliche Innenringe 1, wie in Fig. 9 und 11 untere Bildhälfte gezeigt, durch ein gemeinsames Stützelement 2 zu erfassen, welches in seiner Länge entsprechend der jeweiligen Breite der geschlitzten Innenringe 1 und deren Längsabstand zueinander ausgebildet ist. Das zusätzliche Stützelement 2' kann gemäß den Fig. 10 und 11 auf gleiche Weise gestaltet sein. Im übrigen wird die Reibungsfeder nach Fig. 11 durch übliche Zugtöpfe 5 und eine Zugschraube 5a zu einer montagefertigen vorgespannten Einheit.

Im Federdiagramm nach Fig. 12 ist mit A die Kennlinie einer Reibungsfeder ohne ein Stützelement 2 bezeichnet, die mit einer Kraft $F_{VA}$ = 10 kN vorgespannt sein soll. Die Schließkraft $F_{SA}$ des oder der geschlitzten Innenringe 1 dieser Feder beträgt 15 kN bei einem Schließweg $s_A$.

B ist die Kennlinie der erfindungsgemäßen Reibungsfeder mit Stützelement 2, wobei hier das Stützelement 2 die Schließkraft $F_{SA}$ der Kennlinie A auf etwa den doppelten Wert $F_{SB}$ vergrößert. Dadurch ergibt sich eine gesteigerte Vorspannkraft $F_{VB}$, was sich vorteilhaft auf die Rückstellung der entlasteten Feder in die Ausgangslage auswirkt. Weiter wird durch die größere Schließkraft $F_{SB}$, selbst bei der höheren Vorspannkraft $F_{VB}$, ein länger weich bleibender Anhubweg $s_B$ gegenüber der Kennlinie A erzielt, wodurch die Entgleisungssicherheit der Schienenfahrzeuge steigt.

0068151

Ringfeder G.m.b.H.                                    M. 1090
4150 Krefeld-Uerdingen


                           Reibungsfeder


Patentansprüche:

1. Reibungsfeder, die über jeweils konische Berührungsflächen (3a, 4a, 1e) zusammenwirkende Außen- und Innenringe (3 bzw. 4, 1) aufweist, wobei mindestens ein Innenring (1) mit einem axialen Schlitz (1b) versehen ist, dadurch gekennzeichnet, daß innerhalb des geschlitzten Innenringes (1) ein ringförmiges, ebenfalls axial geschlitztes Stützelement (2) angeordnet ist, das über seine äußere
Mantelfläche (2a) gegen die innere Umfangsfläche (1a) dieses Innenringes (1) anliegt.

2. Reibungsfeder nach Anspruch 1, dadurch gekennzeichnet,
daß die Schlitzbreite des Stützelementes (2) bei unbelasteter Feder zumindest um das Maß der bei Erreichen der
Federendkraft vorliegenden maximalen Verformung des geschlitzten Innenringes (1) größer ist als die Schlitzbreite des Innenringes (1).

3. Reibungsfeder nach einem der Ansprüche 1 oder 2, dadurch gekennzeichnet, daß der geschlitzte Innenring (1)
und das Stützelement (2) derart zueinander angeordnet
sind, daß die jeweiligen Schlitze (1b bzw. 2b) eine um
etwa 180° versetzte Lage aufweisen.

4. Reibungsfeder nach einem der Ansprüche 1 bis 3, dadurch gekennzeichnet, daß das Stützelement (2) im Bereich
seiner beiden Stirnflächen mit jeweils einem seine äußere
Mantelfläche (2a) nach außen überragenden Anschlagbund
(2c) versehen ist.

5. Reibungsfeder nach Anspruch 4, dadurch gekennzeichnet, daß mindestens ein Anschlagbund (2c) einen in Richtung auf den geschlitzten Innenring (1) ansteigenden Außenkonus (2d) aufweist, dessen kleinster Durchmesser geringfügig kleiner ist als der Innendurchmesser des geschlitzten Innenringes (1).

6. Reibungsfeder nach einem der Ansprüche 1 bis 3, dadurch gekennzeichnet, daß der Innenring (1) an seiner inneren Umfangsfläche (1a) eine umlaufende Nut (1c) aufweist, deren Breite zumindest der Breite des Stützelementes (2) entspricht.

7. Reibungsfeder nach Anspruch 6, dadurch gekennzeichnet, daß mindestens einer der beiden an die Nut (1c) angrenzenden Abschnitte der inneren Umfangsfläche (1a) des Innenringes (1) als in Richtung auf das Stützelement (2) ansteigender Innenkonus (1d) ausgebildet ist, dessen größter Durchmesser geringfügig größer ist als der Außendurchmesser des Stützelementes (2).

8. Reibungsfeder nach einem der Ansprüche 1 bis 3, dadurch gekennzeichnet, daß der geschlitzte Innenring (1) und das Stützelement (2) mit einer in Quermitte angeordneten, aus einem Wulst (1f) und einer Bettung (2f) gebildeten Halterung versehen sind.

9. Reibungsfeder, die mindestens zwei geschlitzte Innenringe (1) aufweist, nach einem der Ansprüche 1 bis 8, dadurch gekennzeichnet, daß das Stützelement (2) in seiner Breite entsprechend der jeweiligen Breite der geschlitzten Innenringe (1) und deren Längsabstand zueinander ausgebildet ist.

10. Reibungsfeder nach einem der Ansprüche 1 bis 9, dadurch gekennzeichnet, daß das Stützelement (2) im jeweiligen Bereich des Überganges der äußeren Mantelfläche (2a)

in die den Schlitz (2b) begrenzende Seitenfläche (2g) eine Abrundung (2h) aufweist.

11. Reibungsfeder nach einem der Ansprüche 1 bis 10, dadurch gekennzeichnet, daß das Stützelement (2) über seine innere Mantelfläche (2e) mit der äußeren Mantelfläche (2a') eines zusätzlichen Stützelementes (2') zusammenwirkt.

Fig. 1

Fig. 2

Fig. 3

Fig. 4

Fig. 5

Fig. 6

Fig. 7

Fig. 8

Fig. 9

## Fig. 10

## Fig. 11

Fig. 12

4/4

0068151